# EUROPEAN PATENT APPLICATION

(11) **EP 4 815 136 A2**
(43) Date of publication of application: **30.09.2026**
(21) Application number: 26158913.9
(22) Date of filing: 17.02.2026
(51) Int. Cl.: H01M 50/209, H01M 50/503, H01M 50/517, H01M 50/591

(54) **ENERGY STORAGE DEVICE**

(30) Priority: 26.03.2025 JP 2025052169
(71) Applicant: Toyota Jidosha Kabushiki Kaisha, Toyota-shi, Aichi-ken 471-8571 (JP)
(72) Inventor: KAWAMOTO, Naoya, TOYOTA-SHI, AICHI-KEN, 471-8571 (JP); FUJIWARA, Nobuyoshi, TOYOTA-SHI, AICHI-KEN, 471-8571 (JP); KUMAZAWA, Kazuya, TOYOTA-SHI, AICHI-KEN, 471-8571 (JP); KIMURA, Kenta, TOYOTA-SHI, AICHI-KEN, 471-8571 (JP)
(74) Representative: Cabinet Beau de Loménie

(57) **Abstract**

An energy storage device comprising a plurality of battery modules housed in a battery case, wherein each of the battery modules is provided with a pair of end plates. Each end plate has a plurality of cutouts recessed toward battery cells, and these cutouts are provided above and below a terminal block. By providing the cutouts in this manner, space can be secured above and below the terminal block. This allows a positive-electrode busbar and a negative-electrode busbar to be positioned closer to their respective end plates. As a result, the positive-electrode and negative-electrode busbars can be arranged more effectively within the limited space inside a battery case.

## Description

### BACKGROUND OF THE INVENTION

### 1. Field of the Invention

The present invention relates to energy storage devices.

### 2. Description of Related Art

Japanese Unexamined Patent Application Publication No. 2024-084681 (JP 2024-084681 A) discloses technology related to a busbar assembly and a cell module. A cell module is formed by integrating a plurality of battery cells, and the electrodes of the cells are collectively connected through a busbar assembly.

### SUMMARY OF THE INVENTION

For example, vehicles, particularly battery electric vehicles (BEVs) and hybrid electric vehicles (HEVs), are equipped with large energy storage devices. Such an energy storage device includes a plurality of battery modules each formed of a plurality of battery cells. These battery modules are electrically connected via busbars.

However, the battery modules are housed in a battery case, and it is desired to devise how to effectively arrange the busbars within the limited space inside the battery case.

In view of the above, an object of the present invention is to provide an energy storage device in which busbars can be effectively arranged within a battery case.

An energy storage device of a first aspect includes a plurality of battery modules housed in a battery case. Each of the battery modules is provided with a pair of end plates that is electrically conductive. The end plates are respectively disposed at both ends of the battery module in an arrangement direction in which a plurality of battery cells is arranged. The end plates include: a positive-electrode busbar connection portion that is provided on one of the end plates and is electrically connected to a plurality of positive electrode terminals provided on the battery cells and to a positive-electrode busbar of electrical equipment connected to the battery module; a negative-electrode busbar connection portion that is provided on the other of the end plates and is electrically connected to a plurality of negative electrode terminals provided on the battery cells and to a negative-electrode busbar of the electrical equipment; and cutouts that are recessed toward the battery cells above and below the positive-electrode busbar connection portion and the negative-electrode busbar connection portion. The positive-electrode busbar connection portion and the negative-electrode busbar connection portion are respectively provided at intermediate portions, in a height direction, of the corresponding end plates.

The energy storage device of the first aspect includes the battery modules. The electrically conductive end plates are respectively provided at both ends of each battery module in the arrangement direction in which the battery cells are arranged. The positive-electrode busbar connection portion is provided on one of the end plates. Through this positive-electrode busbar connection portion, the positive electrode terminals provided on the battery cells and the positive-electrode busbar of the electrical equipment connected to the battery module are electrically connected.

The negative-electrode busbar connection portion is provided on the other of the end plates. Through this negative-electrode busbar connection portion, the negative electrode terminals provided on the battery cells and the negative-electrode busbar of the electrical equipment are electrically connected.

The end plates have the cutouts recessed toward the battery cells. The cutouts are respectively provided above and below the positive-electrode busbar connection portion and the negative-electrode busbar connection portion.

By providing the cutouts in this manner, space can be secured above and below the positive-electrode busbar connection portion and the negative-electrode busbar connection portion, allowing the positive-electrode busbar and the negative-electrode busbar to be positioned closer to their respective end plates. As a result, the positive-electrode and negative-electrode busbars can be arranged more effectively within the limited space inside the battery case.

Furthermore, in the above aspect, the positive-electrode busbar connection portion and the negative-electrode busbar connection portion are respectively provided at intermediate portions, in the height direction, of the corresponding end plates. With this configuration of the above aspect, in the positive-electrode and negative-electrode busbars that are connected to the electrical equipment, the current paths can be shortened, thereby reducing electrical resistance.

According to an energy storage device of a second aspect, in the energy storage device of the first aspect, a resin bracket to which the positive-electrode busbar connected to a positive-electrode side of the electrical equipment, or the negative-electrode busbar connected to a negative-electrode side of the electrical equipment, is electrically connectable is provided on the end plate.

In the energy storage device of the second aspect, the resin bracket is provided on the end plate. By providing an electrically conductive portion in this resin bracket, the positive-electrode busbar connected to the positive-electrode side of the electrical equipment, or the negative-electrode busbar connected to the negative-electrode side of the electrical equipment, is made electrically connectable to the battery module.

According to an energy storage device of a third aspect, in the energy storage device of the first or second aspect, a restraint band that applies a compressive force to the battery cells along the arrangement direction is attached to each of upper and lower end portions of the end plate.

According to an energy storage device of a fourth aspect, a restraint band that applies a compressive force to the battery cells along the arrangement direction is attached to each of upper and lower end portions of the end plate. By using the end plate as a member for attaching the restraint band, costs can be reduced compared with a case where separate members for attaching the restraint band are provided.

As described above, the energy storage device according to the present invention enables the busbars to be arranged effectively within the battery case.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic exploded perspective view of an energy storage device according to an embodiment, as viewed obliquely from the upper front left;
FIG. 2 is a schematic exploded perspective view of the energy storage device according to the present embodiment, as viewed obliquely from the upper rear left; and
FIG. 3 is a schematic sectional view taken along line A-A in FIG. 2.

### DETAILED DESCRIPTION OF EMBODIMENTS

An embodiment for carrying out the present disclosure will be described below with reference to the drawings. The following description schematically illustrates aspects relevant to achieving the object of the present disclosure, and focuses on the corresponding portions of the disclosure. Portions not described in detail are assumed to be based on known techniques. Identical or equivalent components are denoted by the same or similar signs throughout the drawings, and repetitive description will be omitted. When multiple identical or equivalent components are included in the drawings, only some of them may be denoted by signs for clarity.

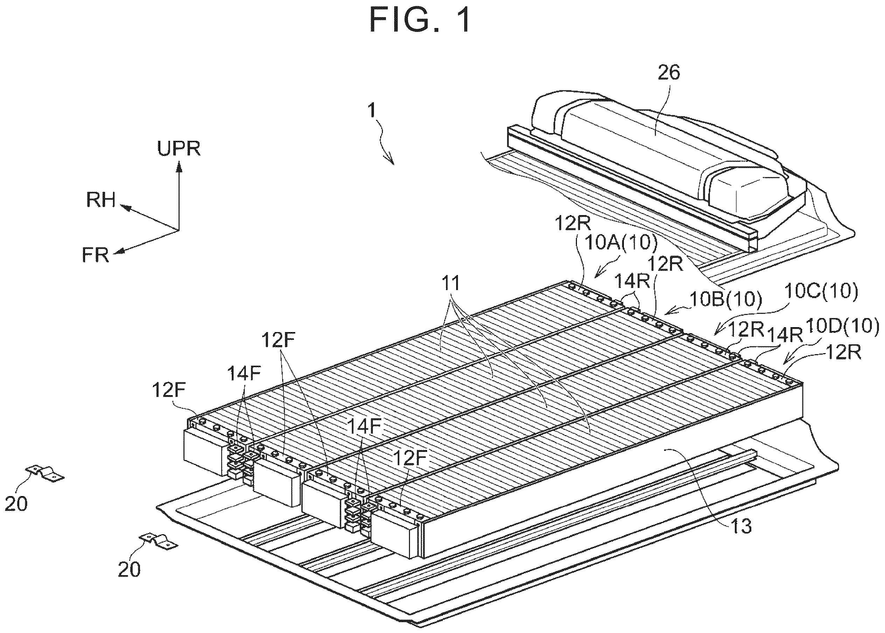

FIG. 1 is a schematic exploded perspective view of an energy storage device 1 according to one embodiment, as viewed obliquely from the upper front left. The energy storage device 1 (also referred to as "battery pack") according to the present embodiment will be described by way of example as one that is mounted at an appropriate location in a vehicle, such as on a floor portion. In FIG. 1, arrow FR corresponds to the forward direction of the vehicle on which the energy storage device 1 is mounted, arrow UPR corresponds to the upward direction of the vehicle, and arrow RH corresponds to the rightward direction of the vehicle. In the following description, the direction along arrow FR is referred to as the "front-rear direction," the direction along arrow RH as the "left-right direction," and the direction along arrow UPR as the "up-down direction."

### Configuration of Energy Storage Device

First, the configuration of the energy storage device according to the present embodiment will be described.

As shown in FIG. 1, the energy storage device 1 includes a plurality of battery modules 10A to 10D and a battery case 40 in which the battery modules 10A to 10D are installed.

Each of the battery modules 10A to 10D includes a plurality of battery cells 11 arranged along the front-rear direction. As shown in FIG. 1, the energy storage device 1 of the present embodiment exemplifies a configuration in which four battery modules 10A to 10D elongated in the front-rear direction are arranged substantially in parallel within the battery case 40.

For ease of description, the four battery modules 10A to 10D are sometimes individually referred to as the "first battery module 10A," the "second battery module 10B," the "third battery module 10C," and the "fourth battery module 10D." Although the four battery modules 10A to 10D in the present embodiment are illustrated as being connected in series with each other, they may alternatively be connected partially in parallel.

Although the four battery modules 10A to 10D differ slightly in the layout of terminals (busbar connection portions) 15F, 15R and other details, they generally have the same configuration. Accordingly, the specific configuration of the four battery modules 10A to 10D will be described by taking the third battery module 10C as a representative example. When there is no need to distinguish among the four battery modules 10A to 10D, they are collectively simply referred to as the battery module 10.

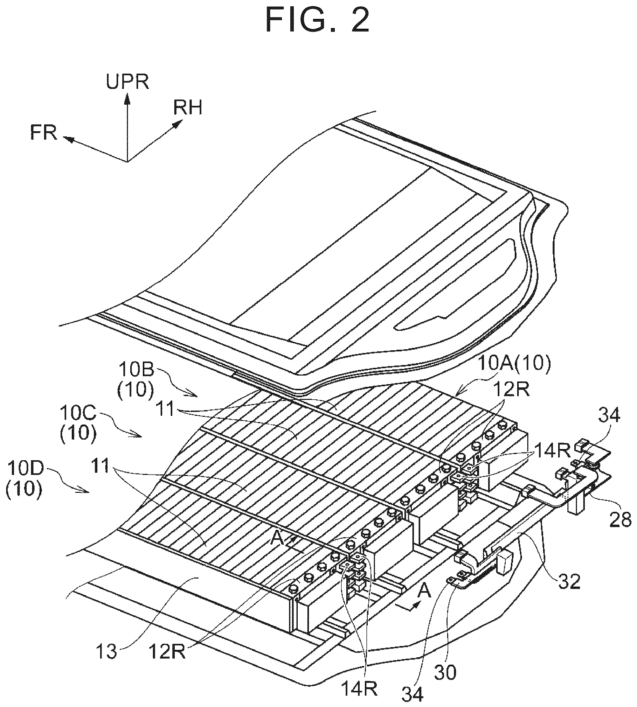

FIG. 2 is a schematic exploded perspective view of the energy storage device 1, as viewed obliquely from the upper rear left. As shown in FIGS. 1 and 2, the third battery module 10C may include a plurality of battery cells 11 aligned in a single row along the front-rear direction, end plates 12F, 12R respectively disposed at both ends of the row of the battery cells 11 in the front-rear direction and supporting the battery cells 11, and a support member 13 supporting the battery cells 11 and the end plates 12F, 12R.

The battery cells 11 may be, for example, prismatic cells elongated in the left-right direction. The battery cells 11 may be, but are not particularly limited to, lithium-ion cells, lithium iron phosphate (LFP) cells, or all-solid-state cells. For example, in the case where the battery cells 11 are prismatic cells, their positive and negative electrodes (not shown) are provided on the left and right side surfaces of the battery cells 11. The positive and negative electrodes of one battery cell 11 are electrically connected, via an intramodule busbar, to the negative and positive electrodes of an adjacent battery cell 11, respectively. The type of the battery cells 11 is not limited to prismatic cells. The battery cells 11 may instead be cylindrical or pouch cells.

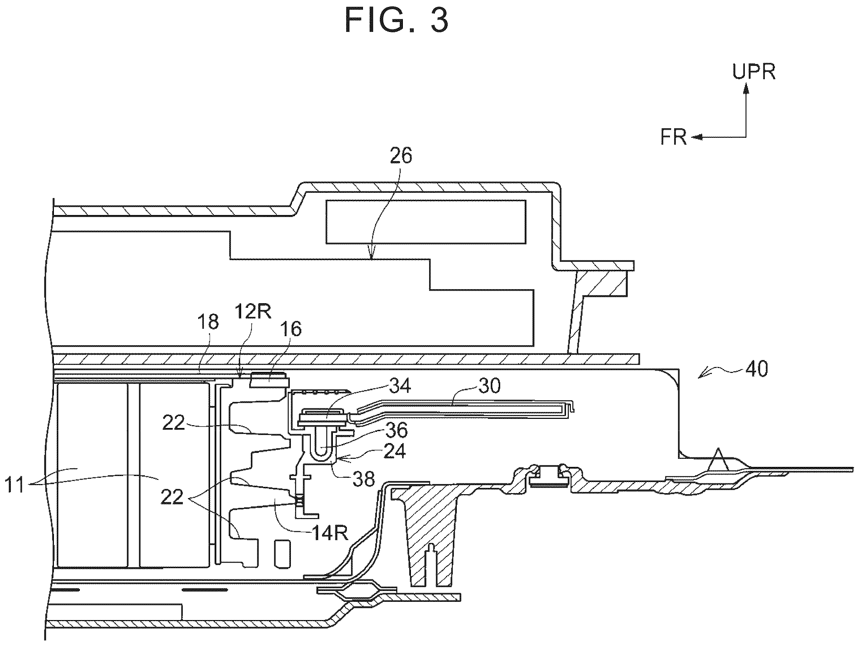

FIG. 3 is a sectional view taken along line A-A in FIG. 2. The end plates 12F, 12R are provided at the respective ends of the row of the battery cells 11 shown in FIG. 1.

In the present embodiment, the end plates 12F, 12R are formed of a metal such as an aluminum alloy, and, as shown in FIG. 3, bolts 16 can be fastened to the end plates 12F, 12R. A restraint band 18 is fastened to the bolts 16, and the restraint band 18 applies a compressive force that brings the end plates 12F, 12R toward each other. This suppresses vibration and expansion of the battery cells 11 and maintains the energy storage performance of the third battery module 10C.

As shown in FIGS. 2 and 3, terminal blocks 14F, 14R are provided at intermediate portions of the end plates 12F, 12R in the up-down direction, respectively. Busbars for the positive or negative electrodes of the battery cells 11 are connected to the terminal blocks 14F, 14R.

In the first battery module 10A, the terminal block 14F on the end plate 12F can be connected to a negative-electrode busbar, and the terminal block 14R on the end plate 12R can be connected to a positive-electrode busbar. In the second battery module 10B, the terminal block 14F on the end plate 12F can be connected to a positive-electrode busbar, and the terminal block 14R on the end plate 12R can be connected to a negative-electrode busbar.

In the third battery module 10C, the terminal block 14F on the end plate 12F can be connected to a negative-electrode busbar, and the terminal block 14R on the end plate 12R can be connected to a positive-electrode busbar. In the fourth battery module 10D, the terminal block 14F on the end plate 12F can be connected to a positive-electrode busbar, and the terminal block 14R on the end plate 12R can be connected to a negative-electrode busbar.

In the present embodiment, a positive-electrode busbar 28 connected to electrical equipment 26 can be connected to the terminal block 14R on the end plate 12R of the first battery module 10A, and a negative-electrode busbar 30 connected to the electrical equipment 26 can be connected to the terminal block 14R on the end plate 12R of the fourth battery module 10D. The terminal block 14R on the end plate 12R of the second battery module 10B and the terminal block 14R on the end plate 12R of the fourth battery module 10D can be connected to a neutral-point busbar 32.

As shown in FIG. 1, the terminal block 14F of the first battery module 10A and the terminal block 14F of the second battery module 10B are electrically connected to each other by an intermodule busbar 20, and the terminal block 14F of the third battery module 10C and the terminal block 14F of the fourth battery module 10D are electrically connected to each other by another intermodule busbar 20.

To enable partial charging and discharging among the battery modules 10A to 10D, a pair of neutral-point busbars 32 is connected to the neutral points of the battery modules 10A to 10D that are electrically connected to each other. The term "neutral point" refers to a voltage that is the midpoint between the positive-side and negative-side voltages of the battery modules that are electrically connected to each other, or to a reference potential.

The electrical equipment 26 may selectively include one or more devices such as a junction box connected to the battery modules 10A to 10D to control charging and discharging thereof, a battery electronic control unit (ECU) that manages the operation of the junction box, an onboard charger (OBC) used during charging, an inverter, or a direct current-to-direct current (DC-to-DC) converter.

In the present embodiment, as shown in FIG. 3, the end plates 12F, 12R each have a plurality of cutouts 22 that is recessed in a generally U-shape toward the battery cells 11. The cutouts 22 are provided above and below the terminal block 14R for the positive or negative electrode.

An electrically insulating resin bracket 24 having high dielectric strength is mounted on the end plate 12R. The resin bracket 24 has recesses 38 into which insertion portions 36 provided on a terminal 34 of the positive-electrode busbar 28 (see FIG. 2), a terminal of the negative-electrode busbar 30, and the ends of the neutral-point busbars 32 (see FIG. 2) can be inserted, these busbars 28, 30, and 32 being connected to the electrical equipment 26 (see FIG. 1). An electrically conductive contact element is provided in each recess 38. When the insertion portion 36 is inserted into the recess 38, the battery module 10 and the negative-electrode busbar 30 become electrically connectable. The same busbars are configured in substantially the same manner.

### Functions and Effects of Energy Storage Device

Next, the functions and effects of the energy storage device according to the present embodiment will be described.

In the present embodiment, as shown in FIGS. 1 to 3, the energy storage device 1 includes the battery modules 10A to 10D. The end plates 12F, 12R are provided at the respective ends of the row of the battery cells 11 in each of the battery modules 10A to 10D.

In the present embodiment, the end plate 12R of the first battery module 10A is provided with a terminal block 14R to which the positive-electrode busbar 28 connected to the electrical equipment 26 is connected. The end plate 12R of the fourth battery module 10D is provided with a terminal block 14R to which the negative-electrode busbar 30 connected to the electrical equipment 26 is connected. Each of the end plates 12R of the second and third battery modules 10B, 10C is provided with a terminal block 14R to which a corresponding one of the neutral-point busbars 32 is connected.

In the present embodiment, each terminal block 14R is provided at an intermediate portion of the corresponding end plate 12R in the up-down direction. This allows the current paths in the positive-electrode busbar 28 and the negative-electrode busbar 30 to be shortened, thereby reducing electrical resistance. In the present embodiment, interference with electrically conductive components disposed above and below each battery module 10 can be suppressed, allowing the positive-electrode busbar 28 and the negative-electrode busbar 30 to be arranged effectively. As a result, the height of each battery module 10 can be reduced, contributing to a reduction in overall height of each battery module 10.

In the present embodiment, the end plate 12R of each battery module 10 is provided with an electrically insulating resin bracket 24 that has high dielectric strength and to which either the positive-electrode busbar 28 or the negative-electrode busbar 30 of the electrical equipment 26 can be electrically connected. The resin bracket 24 has recesses 38 into which the insertion portions 36 provided on terminals of these busbars can be inserted. An electrically conductive contact member is provided in each recess 38, and when the corresponding insertion portion 36 is inserted into the recess 38, the battery module 10 becomes electrically connectable with the busbar.

Accordingly, by inserting the terminal 34 of the positive-electrode busbar 28, the terminal of the negative-electrode busbar 30, and the ends of the neutral-point busbars 32 into their respective insertion portions 36, the battery module 10 is electrically connected to the electrical equipment 26. Attaching the terminal 34 of the positive-electrode busbar 28 and the like via the resin bracket 24 in this manner provides better workability than connection by bolt fastening.

In the present embodiment, each of the end plates 12F, 12R has a plurality of cutouts 22 recessed toward the battery cells 11, and these cutouts 22 are provided above and below the terminal block 14R. By providing the cutouts 22 in this manner, space can be secured above and below the terminal block 14R.

As a result, in the present embodiment, the positive-electrode busbar 28 and the negative-electrode busbar 30 can be positioned closer to their respective end plates, allowing the positive-electrode busbar 28 and the negative-electrode busbar 30 to be arranged more effectively within the limited space inside the battery case 40.

Furthermore, in the present embodiment, the restraint band 18 is fastened to the upper and lower end portions of the end plates 12F, 12R via the bolts 16. By using the end plates 12F, 12R as members for attaching the restraint band 18, costs can be reduced compared with a case where separate members for attaching the restraint band 18 are provided.

Although one embodiment of the present invention has been described above, the invention is not limited to the embodiment. The embodiment described above may be combined as appropriate with various modifications. The present invention may be carried out in various other forms without departing from the spirit and scope of the invention.

## Claims

1. An energy storage device (1) comprising a plurality of battery modules (10A-10D) housed in a battery case (40), wherein:
each of the battery modules (10A-10D) is provided with a pair of end plates (12F,12R) that is electrically conductive, the end plates (12F,12R) being respectively disposed at both ends of the battery module (10A-10D) in an arrangement direction in which a plurality of battery cells (11) is arranged;
the end plates (12F,12R) include
a positive-electrode busbar connection portion that is provided on one of the end plates (12F,12R) and is electrically connected to a plurality of positive electrode terminals provided on the battery cells (11) and to a positive-electrode busbar (28) of electrical equipment connected to the battery module (10A-10D),
a negative-electrode busbar connection portion that is provided on the other of the end plates (12F,12R) and is electrically connected to a plurality of negative electrode terminals provided on the battery cells (11) and to a negative-electrode busbar (30) of the electrical equipment, and
cutouts (22) that are recessed toward the battery cells (11) above and below the positive-electrode busbar connection portion and the negative-electrode busbar connection portion; and
the positive-electrode busbar connection portion and the negative-electrode busbar connection portion are respectively provided at intermediate portions, in a height direction, of the corresponding end plates (12F,12R).

2. The energy storage device (1) according to claim 1, wherein a resin bracket (24) to which the positive-electrode busbar (28) connected to a positive-electrode side of the electrical equipment, or the negative-electrode busbar (30) connected to a negative-electrode side of the electrical equipment, is electrically connectable is provided on the end plates (12F,12R).

3. The energy storage device (1) according to any one of claims 1 and 2, wherein a restraint band (18) that applies a compressive force to the battery cells (11) along the arrangement direction is attached to each of upper and lower end portions of the end plates (12F, 12R).
